# FASCICULE DE BREVET EUROPEEN

(11) **EP 1 112 118 B1**
(45) Date de publication et mention de la délivrance du brevet: **05.07.2006**
(21) Numéro de dépôt: 00925389.9
(22) Date de dépôt: 04.05.2000
(51) Int. Cl.: B01D 53/88, B01J 19/12, B01D 53/00

(54) **PROCEDE DE PURIFICATION D'EFFLUENTS GAZEUX PAR PHOTOCATALYSE, INSTALLATION POUR LA MISE EN OEUVRE DUDIT PROCEDE**
VERFAHREN UND ANLAGE ZUR REINIGUNG VON ABGAS MITTELS PHOTOKATALYSE
METHOD FOR PURIFYING GASEOUS EFFLUENTS BY MEANS OF PHOTOCATALYSIS, INSTALLATION FOR CARRYING OUT SAID METHOD

(30) Priorité: 27.05.1999 FR 9906906
(43) Date de publication de la demande: 04.07.2001
(73) Titulaire: Ahlstrom Paper Group Reseach and Competence Center, 38280 Pont Eveque (FR)
(72) Inventeur: MONDJIAN, Pierre, F-38450 Vif (FR); NGUYEN DINH AN, Christine, F-38000 Grenoble (FR); DELPECH, Françoise, F-38530 Pontcharra (FR); ROUX, Jean-Claude, F-38240 Meylan (FR); BOURGEOIS, Sylvie, F-21000 Dijon (FR); STEINBRUNN, Alexis, F-21380 Asnières lès Dijon (FR); PICHAT, Pierre, F-69370 Saint Didier au Mont d'Or (FR); DISDIER, Jean, F-69300 Caluire (FR); MIETTON-CEULEMANS, Estelle, F-39800 Poligny (FR); BLONDEAU-PATISSIER, Virginie, F-25115 Pouilly les Vignes (FR); BOUVIER, Leonie, 38440 Beauvoir de Marc (FR); DUSSAUD, Joseph, 38200 Vienne (FR); GIRARD, Pierre, 38330 Saint Ismier (FR)
(74) Mandataire: Vuillermoz, Bruno
(86) Numéro de dépôt international: PCT/FR2000/001205
(87) Numéro de publication internationale: WO 2000/072945

(56) Documents cités:
- EP-A- 0 590 202
- DE-A- 3 642 472
- US-A- 5 778 664

## Description

L'invention se rapporte à un procédé de purification des effluents gazeux par photocatalyse. Elle concerne également l'installation pour la mise en oeuvre de ce procédé.

La réaction dite photocatalytique, encore dénommée photocatalyse, consiste à détruire les différents polluants organiques et/ou inorganiques présents dans les effluents gazeux et notamment l'air par réaction photochimique, laquelle est provoquée par l'irradiation d'un catalyseur sous rayons ultraviolets.

Pour l'essentiel, la photocatalyse est initiée en activant un solide semi-conducteur (photocatalyseur tel que par exemple le TiO₂) par des rayonnements UV à une longueur d'onde inférieure à 380 nanomètres, provoquant des changements électroniques au sein du semi-conducteur et conduisant en présence d'air ou d'eau à la création de radicaux oxygénés à la surface du semi-conducteur. Ces radicaux attaquent les composés organiques ou non adsorbés sur le semi-conducteur et, par succession de réactions chimiques impliquant l'oxygène de l'air, dégradent les composés jusqu'au stade final de l'oxydation.

La présente invention se rapporte plus particulièrement, mais de façon non limitative à la purification de l'air. En effet, l'air est susceptible de contenir un grand nombre de polluants parmi lesquels les NOₓ, NH₃, H₂S, CO, O₃, les alcènes en C₂-C₄ chlorés ou non, le chlorométhane, l'iso-octane, le benzène, le toluène, le xylène, l'isopropylbenzène, les alcools aliphatiques saturés en C₁-C₄, le méthylmercaptan, le chlorophénol, le nitrophénol, le méthyltertiobutyléther, le diméthoxyméthane, les aldéhydes en C₁-C₄, l'acétone, l'acide formique, l'acide acétique, l'acide 2-méthylpropanoïque, le chlorure de dichloroacétyle, le diméthylformamide, le triméthylamine, l'acétonitrile, la pyridine, le méthanethiol, le diméthyldisulfure.

Comme déjà dit, en tant qu'agent photocatalyseur susceptible de déclencher la réaction photocatalytique, on peut utiliser notamment, mais de façon non limitative du dioxyde de titane TiO₂ anatase, lequel, activé par la lumière U.V., se trouve modifié électroniquement de sorte à conduire à la formation de radicaux hydroxyles OH^{•} et d'oxygène O^{•} aptes à attaquer les chaînes carbonées organiques adsorbés sur le TiO₂ en le dégradant jusqu'à ce que le carbone organique soit complètement transformé en dioxyde de carbone. On peut cependant envisager d'autres agents photocatalyseurs tels que ceux donnés dans le groupe comprenant les oxydes métalliques, les oxydes alcalino-terreux, les oxydes d'actinides et les oxydes de terres rares.

En pratique, les agents photocatalyseurs sont fixés au moyen d'agents liants sur des supports, notamment des supports fibreux cellulosiques, ou non tissés synthétiques, ou des supports de fibres de verre. De telles associations, encore désignées par le terme "média filtrant" sont largement connues et décrites par exemple dans la demande de brevet internationale du Demandeur PCT/FR 99/00748.

Ces médias filtrants peuvent être mis en oeuvre dans des installations de purification d'air par réaction photocatalytique, telle que celle décrite dans le document US-A-5 790 934. Le réacteur faisant l'objet de ce document présente une pluralité de supports fibreux enduits d'une composition photocatalytique, lesquels sous rayonnement UV, sont léchés par l'effluent gazeux à purifier. Il est également précisé que la source lumineuse est substantiellement perpendiculaire au support fibreux.

Même si ce type de réacteur est relativement simple dans sa conception, le taux de purification de l'effluent gazeux reste relativement faible. On observe ainsi, d'après l'exemple 1, que le taux de conversion du formaldéhyde est seulement de 65 %.

En d'autres termes, le problème que se propose de résoudre l'invention est de développer un procédé de purification d'effluents gazeux présentant une efficacité supérieure à ceux proposés dans l'art antérieur.

Un autre problème que se propose de résoudre l'invention est de fournir une installation simple dans sa conception pour la mise en oeuvre du procédé.

Un autre objectif de l'invention est de fournir une installation qui puisse être facilement adaptée dans des enceintes dégageant de l'air pollué.

Pour ce faire, l'invention propose un procédé de purification d'effluents gazeux par réaction photocatalytique selon lequel, sous rayonnement ultraviolet en une seule étape, on fait subir à l'effluent gazeux des mouvements de léchage d'au moins un premier support, et de traversée d'un second support, lesdits premier support et second support étant recouverts d'au moins un agent photocatalyseur.

En d'autres termes, le procédé de l'invention consiste à combiner léchage et mouvement traversant par l'effluent gazeux à traiter de supports enduits d'un agent photocatalyseur. On a en effet observé qu'une telle combinaison sous rayonnement ultraviolet permettait d'augmenter considérablement l'efficacité de la purification par rapport à un léchage ou mouvement traversant seul par l'effluent gazeux d'un support recouvert d'agent photocatalytique.

Selon l'orientation qui est donnée à l'effluent gazeux, ledit effluent lèchera les premier et second supports, puis traversera ledit second support.

Selon une autre forme de réalisation, l'effluent ne fera que lécher le premier support et traversera le second.

Comme déjà dit, l'invention se rapporte également à l'installation pour la mise en oeuvre de ce procédé. Une telle installation peut être désignée par le terme de photoréacteur.

Selon une première caractéristique, l'installation pour la purification d'effluents gazeux par réaction photocatalytique comprend :
◆ une source de rayonnement ultraviolet ;
◆ deux cuves concentriques respectivement :
   - une cuve externe dont la face interne de la paroi présente un support recouvert d'au moins un agent photocatalyseur ;
   - une cuve interne dont la paroi est perforée, la face externe de ladite paroi présentant un support recouvert d'au moins un agent photocatalyseur ;
◆ des moyens d'entrée de l'effluent gazeux à purifier ;
◆ des moyens de sortie de l'effluent gazeux purifié ;
l'effluent gazeux à purifier étant dirigé de sorte à venir lécher au moins la face interne de la paroi de la cuve externe et traverser la paroi de la cuve interne.

Dans une forme de réalisation avantageuse, chacune des cuves externe et interne est de forme cylindrique.

Par ailleurs, afin d'initier et d'augmenter la vitesse de la réaction photocatalytique, la source de rayonnement UV se présente sous forme d'au moins une lampe UV tubulaire disposée entre la paroi de la cuve cylindrique externe et la paroi de la cuve cylindrique interne, parallèlement auxdites parois.

Pour permettre la pénétration de l'effluent à traiter dans l'installation, les moyens d'entrée de l'effluent gazeux se présentent sous forme d'au moins une ouverture ménagée sur l'une des faces de la cuve cylindrique externe.

Avantageusement, ladite ouverture est munie d'un injecteur.

Dans une forme de réalisation préférée, les moyens d'entrée de l'effluent gazeux se présentent sous forme de douze ouvertures munies d'injecteurs réparties régulièrement sur l'une des faces de la cuve cylindrique externe, de sorte à obtenir une répartition uniforme de l'effluent gazeux au sein de ladite cuve cylindrique externe.

Au contraire, pour permettre la sortie de l'air purifié, les moyens de sortie de l'effluent gazeux se présentent sous forme d'au moins une ouverture ménagée sur la face opposée de la cuve cylindrique interne.

Pour améliorer la convection de l'effluent gazeux à traiter, au moins une des deux cuves cylindriques est animée d'un mouvement rotatif. De la sorte, l'effluent à traiter se déplace tangentiellement à la paroi de la cuve cylindrique externe selon un mouvement turbulent donc léchant, pouvant donc simultanément lécher la paroi de la cuve cylindrique externe et celle de la cuve cylindrique interne, puis enfin traverser la paroi de la cuve cylindrique interne.

Dans une première forme de réalisation, chacune des deux cuves cylindriques tourne dans un même sens.

Dans une seconde forme de réalisation, chacune des deux cuves cylindriques tourne dans le sens opposé.

Dans une troisième forme de réalisation, une seule cuve cylindrique tourne.

Pour accélérer la sortie de l'effluent traité, l'installation peut être également équipée de moyens d'aspiration. Tout moyen d'aspiration connu peut être envisagé.

L'invention et les avantages qui en découlent ressortiront mieux de l'exemple de réalisation suivant, à l'appui des figures annexées.
La figure 1 est une représentation schématique de l'installation de l'invention.
La figure 2 est une représentation schématique d'un pilote de traitement d'effluent gazeux par photocatalyse.
La figure 3 est une représentation de la concentration en méthanol en fonction du temps après traitement dans le pilote de traitement conforme à la figure 2.
Les figures 4 et 5 montrent l'influence de la nature du contact sur les parois du photoréacteur de l'effluent gazeux d'abord sur la capacité d'adsorption de l'agent photocatalyseur et ensuite sur la photocatalyse.

### * Installation de l'invention encore dénommée photoréacteur

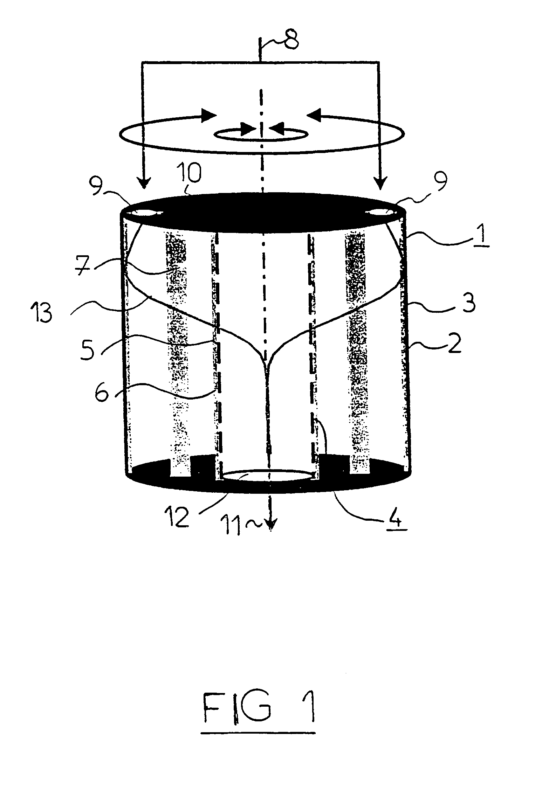

On a représenté sur la figure 1 le photoréacteur de l'invention, lequel comprend une cuve cylindrique externe (1) dont la face interne de la paroi (2) présente un support recouvert d'un agent photocatalyseur (3) et d'une cuve cylindrique interne (4) dont la paroi perforée (5) présente sur sa face externe un support recouvert d'un agent photocatalyseur (6).

En pratique, la fixation du support enduit (6) sur la paroi perforée (5) de la cuve cylindrique (4) est obtenue par serrage d'une barrette de fixation aux formes adéquates suivant une génératrice de la cuve cylindrique (4), ainsi que par pincement à l'aide de joints dilatants circulaires à chaque extrémité de la cuve cylindrique (4).

La fixation du support enduit (3) sur la paroi interne (2) de la cuve cylindrique (1) est obtenue par pincement dans les lèvres des joints d'étanchéité de formes adéquates de la cuve cylindrique (1).

Sont également représentées référencées (7) les lampes tubulaires UV, lesquelles sont disposées dans l'espace séparant la cuve cylindrique externe (1) de la cuve cylindrique interne (4) et ce, parallèlement à leur paroi. En pratique, les lampes UV sont réparties régulièrement à égale distance de la paroi de la cuve cylindrique externe et de celle de la cuve cylindrique interne.

Pour permettre l'entrée de l'effluent de polluant à traiter (8), on a représenté référencées (9) deux ouvertures ménagées sur la face supérieure (10) des deux cuves cylindriques concentriques (1,4) à proximité de la périphérie de la cuve cylindrique externe. On peut également envisager plusieurs ouvertures réparties régulièrement à proximité du bord de la cuve cylindrique externe. Les injecteurs ne sont pas représentés.

Pour permettre la sortie de l'effluent traité (11), on a représenté référencée (12) une ouverture sur la face opposée de la cuve cylindrique interne.

Pour permettre la convection de l'effluent à traiter, chacune des deux cuves cylindriques est animée d'un mouvement rotatif. Sur la figure 1, les cuves cylindriques sont représentées comme pouvant tourner dans un sens, comme dans l'autre. Il s'ensuit que le flux gazeux se déplace par un mouvement turbulent léchant au moins la surface interne de la paroi de la cuve cylindrique externe, l'effluent gazeux traversant ensuite la paroi de la cuve cylindrique interne. Une représentation simplifiée du trajet est tracée (13).

### * Pilote de traitement par photocatalyse

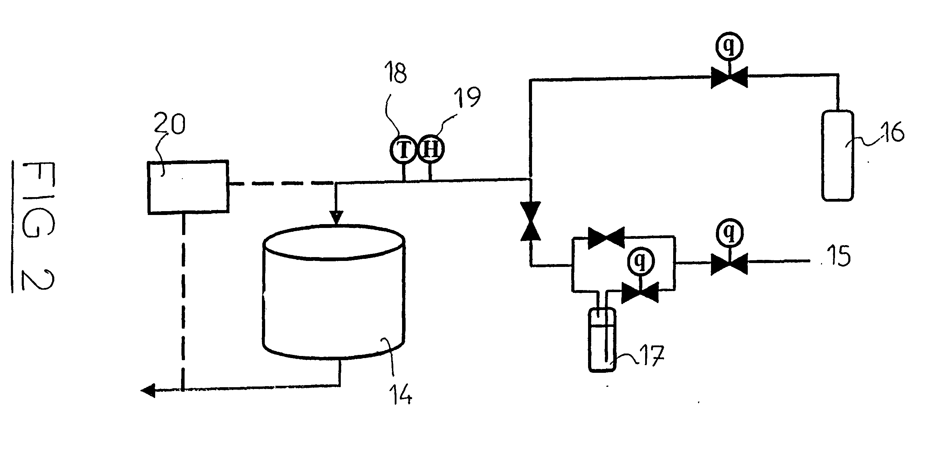

Sur la figure 2, on a représenté un pilote de traitement par photocatalyse comprenant le photoréacteur de l'invention référencé (14), lequel est alimenté à sa partie supérieure par un mélange d'air (15) et d'effluent gazeux concentré de polluant (16). L'air peut être avantageusement humidifié à l'aide d'un humidificateur (17). Sur le circuit, on prévoit également un thermomètre (18), ainsi qu'un hygromètre (19). La composition de l'effluent avant et après purification est étudiée par chromatographie en phase gazeuse (20).

### * Essais réalisés sur le pilote de traitement décrit ci-avant

On évalue à l'aide de ce pilote de traitement le taux d'élimination d'agent polluant d'un effluent gazeux constitué de méthanol et d'air, à raison d'environ 238 ppmv de méthanol, dont la composition est représentée dans le tableau ci-après.

**Tableau 1**

| | |
|---|---|
| Vm (L.mol⁻¹) | 24,07 |
| Cᵢ(ppmv) | ≈ 238 |
| M(g.mol⁻¹) | 32,04 |
| d(mg.L⁻¹) | 0,7915 |

- Vm :: Volume molaire à 20°C [L³]
- Ci :: Concentration du méthanol à l'entrée du photoréacteur [M.L⁻³]
- M :: Masse moléculaire du méthanol [M]
- d :: Densité du méthanol [M.L⁻³]

L'effluent concentré de méthanol (16) est préparé en introduisant sous une faible pression de 0,7 bars du méthanol liquide dans une cuve. Le méthanol concentré est ensuite dilué dans de l'air (15), l'humidité relative du mélange obtenu étant donnée par l'humidificateur (17). Le thermomètre (18) et l'hygromètre (19) mesurent la température et l'humidité relative de l'effluent gazeux dans l'installation.

La concentration de méthanol est mesurée à l'aide d'un détecteur à ionisation de flamme.

Le support recouvert d'agent photocatalytique est un support de fibres de verre enduit d'une composition de TiO₂ commercialisée sous la marque TIONA PC 500. L'enduction des fibres de verres est réalisée à raison de 10 g/m² de TiO₂ par face.

Les conditions opératoires sont les suivantes :
- humidité relative de l'effluent à l'entrée du réacteur 0 %
- température 19 à 21° C
- nombre de lampes 0 ou 12
- vitesse de rotation opposée ± 25 tr/min

### a/ Mise en évidence de la photocatalyse

Différentes expériences ont été menées référencées 1, 2, 3 et 4.
L'expérience 1 a été effectuée sans TiO₂ ni UV (dilution)
L'expérience 2 a été effectuée sans TiO₂ avec UV (photolyse)
L'expérience 3 a été effectuée avec TiO₂ sans UV (adsorption)
L'expérience 4 a été effectuée avec TiO₂ et UV (photocatalyse)

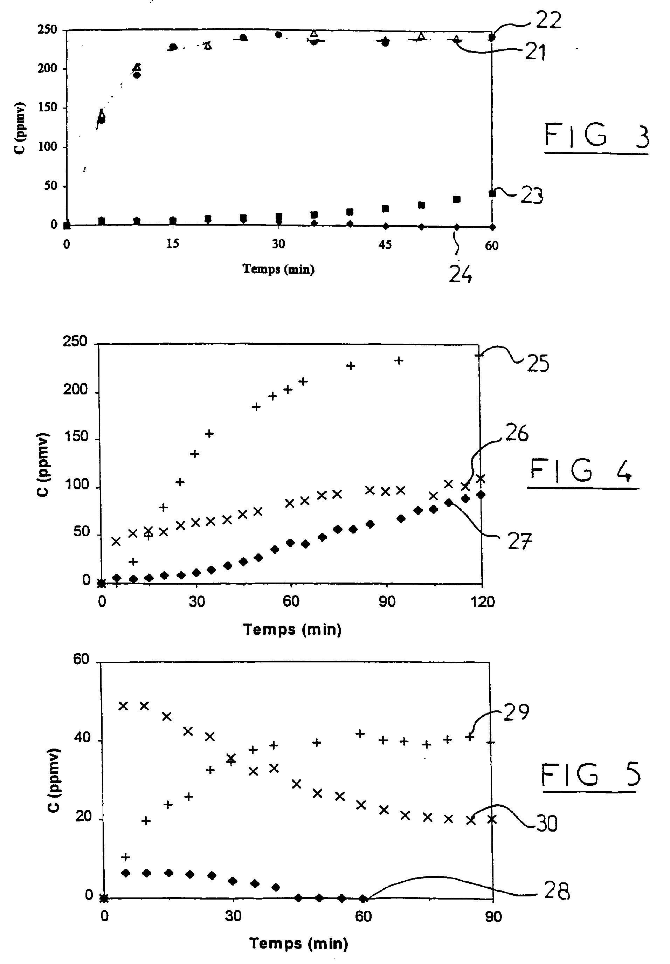

On a représenté sur la figure 3 la concentration de méthanol dans l'effluent traité en fonction du temps.

Comme le montrent les courbes 21 (expérience 2) et 22 (expérience 1), on constate qu'il n'y a pas de phénomène de photocatalyse lorsque le support n'est pas enduit d'agent photocatalyseur.

La courbe 23 (expérience 3) montre la capacité du TiO₂ à adsorber l'agent polluant. Enfin, la courbe 24 (expérience 4) montre l'efficacité sous U.V de la destruction de l'agent polluant par photocatalyse sur le TiO₂, puis de sa destruction par photocatalyse. On note que le phénomène de photocatalyse est rapide et total.

### b/ Influence de la nature du contact de l'effluent sur les parois du photoréacteur

On a fait subir dans cet exemple à l'effluent polluant trois cheminements différents :
- un traitement de léchage de la face interne de la paroi de la cuve externe ;
- un traitement de traversée de la paroi de la cuve interne ;
- un traitement de léchage d'au moins la face interne de la cuve externe et de traversée de la paroi de la cuve interne.

La figure 4 montre l'influence de la nature du contact sur la capacité d'adsorption de l'agent polluant par le TiO₂ lorsque l'effluent gazeux est soumis à un mouvement de traversée (courbe 25), à un mouvement de léchage (courbe 26) ou la combinaison des deux mouvements (courbe 27).

Comme le montre cette figure, le support enduit de TiO₂ est très rapidement saturé par le seul mouvement de traverse, moins rapidement par un simple mouvement de léchage. En revanche, la saturation est très lente, lorsqu'on fait subir à l'effluent gazeux la combinaison de léchage et de traversée.

Sur la figure 5, on a représenté la photocatalyse de l'effluent gazeux sur le support enduit de l'agent photocatalytique.

Comme le montre cette figure, la combinaison du léchage et de la traversée (courbe 28) permet d'obtenir une action photocatalytique d'une efficacité totale, alors que le simple traitement de traversée (courbe 29) ou de léchage (courbe 30) reste insuffisant.

Bien entendu, une telle installation peut être mise en place dans toutes les enceintes susceptibles de dégager des effluents gazeux pollués.

L'invention et les avantages qui en découlent ressortent bien de la description qui précède. On notera en particulier l'efficacité du procédé de purification d'un effluent gazeux par combinaison d'un mouvement de léchage et de traversée, de même que la conception simple de l'installation.

## Revendications

1. Procédé de purification d'effluents gazeux par réaction photocatalytique selon lequel, sous rayonnement ultraviolet en une seule étape, on fait subir à l'effluent gazeux des mouvements de léchage d'au moins un premier support, et de traversée d'un second support, lesdits premier support et second support étant recouverts d'au moins un agent photocatalyseur.

2. Procédé de purification selon la revendication 1, **caractérisé en ce qu'**on fait subir à l'effluent gazeux des mouvements de léchage des premier et second supports.

3. Installation pour la mise en oeuvre du procédé objet de l'une des revendications 1 ou 2 comprenant :
◆ une source de rayonnement ultraviolet (7) ;
◆ deux cuves concentriques respectivement :
• une cuve externe (1) dont la face interne de la paroi (2) est recouverte d'un support enduit d'au moins un agent photocatalyseur (3) ;
• une cuve interne (4) dont la paroi (5) est perforée, la face externe de ladite paroi étant recouverte d'un support enduit d'au moins un agent photocatalyseur (6) ;
◆ des moyens d'entrée (9) de l'effluent gazeux à purifier ;
◆ des moyens de sortie (12) de l'effluent gazeux purifié ;
l'effluent gazeux à purifier étant dirigé (13) de sorte à venir lécher la face interne de la paroi de la cuve externe et traverser la paroi de la cuve interne.

4. Installation selon la revendication 3, **caractérisée en ce que** chacune des cuves externe (1) et interne (4) est de forme cylindrique.

5. Installation selon la revendication 4, **caractérisée en ce que** la source de rayonnement UV se présente sous forme d'au moins une lampe UV tubulaire (7) disposée entre la paroi de la cuve cylindrique externe et la paroi de la cuve cylindrique interne, parallèlement auxdites parois.

6. Installation selon l'une des revendications 4 ou 5, **caractérisée en ce que** les moyens d'entrée de l'effluent gazeux se présentent sous forme d'au moins une ouverture (9) ménagée à la périphérie de l'une des faces de la cuve cylindrique externe (1).

7. Installation selon l'une des revendications 4 à 6, **caractérisée en ce que** les moyens de sortie de l'effluent gazeux se présentent sous forme d'une ouverture (12) ménagée sur la face opposée de la cuve cylindrique interne.

8. Installation selon l'une des revendications 4 à 7, **caractérisée en ce qu'**au moins une des cuves cylindriques est animée d'un mouvement rotatif

9. Installation selon la revendication 8, **caractérisée en ce que** les deux cuves cylindriques tournent dans le même sens.

10. Installation selon la revendication 8, **caractérisée en ce que** les deux cuves cylindriques tournent dans un sens opposé.

11. Installation selon l'une des revendications 3 à 10, **caractérisée en ce qu'**elle est en outre équipée de moyens d'aspiration de l'effluent gazeux.

## Claims

1. Process for the purification of gaseous effluents by a photocatalytic reaction, according to which, under ultraviolet radiation in a single stage, the gaseous effluent is subjected to movements by which at least one first substrate is lapped and by which a second substrate is traversed, the said first substrate and the said second substrate being covered with at least one photocatalysing agent.

2. Purification process according to Claim 1, **characterized in that** the gaseous effluent is subjected to movements by which the first and second substrates are lapped.

3. Plant for the implementation of the process which is the subject-matter of either of Claims 1 and 2, comprising:
- a source of ultraviolet radiation (7);
- two concentric chambers, respectively:
• an outer chamber (1), the internal face of the wall (2) of which is covered with a substrate coated with at least one photocatalysing agent (3);
• an inner chamber (4), the wall (5) of which is perforated, the external face of the said wall being covered with a substrate covered with at least one photocatalysing agent (6);
- inlet means (9) for the gaseous effluent to be purified;
- outlet means (12) for the purified gaseous effluent;
the gaseous effluent to be purified being directed (13) so as to lap the internal face of the wall of the outer chamber and to traverse the wall of the inner chamber.

4. Plant according to Claim 3, **characterized in that** each of the outer (1) and inner (4) chambers is cylindrical in shape.

5. Plant according to Claim 4, **characterized in that** the source of UV radiation is provided in the form of at least one tubular UV lamp (7) positioned between the wall of the cylindrical outer chamber and the wall of the cylindrical inner chamber, parallel to the said walls.

6. Plant according to either of Claims 4 and 5, **characterized in that** the inlet means for the gaseous effluent are provided in the form of at least one opening (9) inserted at the periphery of one of the faces of the cylindrical outer chamber (1).

7. Plant according to one of Claims 4 to 6, **characterized in that** the outlet means for the gaseous effluent are provided in the form of an opening (12) inserted in the opposing face of the cylindrical inner chamber.

8. Plant according to one of Claims 4 to 7, **characterized in that** at least one of the cylindrical chambers is driven with a rotary motion.

9. Plant according to Claim 8, **characterized in that** the two cylindrical chambers rotate in the same direction.

10. Plant according to Claim 8, **characterized in that** the two cylindrical chambers rotate in opposite directions.

11. Plant according to one of Claims 3 to 10, **characterized in that** it is additionally equipped with suction means for the gaseous effluent.

## Patentansprüche

1. Verfahren zur Reinigung von Abgasen durch eine photokatalytische Reaktion, gemäß der das Abgas unter UV-Strahlung in einem einzigen Schritt Umspülungsbewegungen wenigstens eines ersten Trägers und Durchquerungsbewegungen eines zweiten Trägers unterzogen wird, wobei der erste Träger und der zweite Träger mit wenigstens einem Photokatalysator-Medium bedeckt sind.

2. Reinigungsverfahren nach Anspruch 1, **dadurch gekennzeichnet, dass** das Abgas Umspülungsbewegungen des ersten und des zweiten Trägers unterzogen wird.

3. Vorrichtung zur Durchführung des Verfahrens nach einem der Ansprüche 1 oder 2, umfassend:
◆ eine UV-Strahlungsquelle (7),
◆ zwei konzentrische Gefäße, und zwar
• ein äußeres Gefäß (1), dessen Wand (2)-Innenfläche mit einem Träger bedeckt ist, der mit wenigstens einem Photokatalysator-Medium (3) beschichtet ist,
• ein inneres Gefäß (4), dessen Wand (5) perforiert ist, wobei die Außenfläche dieser Wand mit einem Träger bedeckt ist, der mit wenigstens einem Photokatalysator-Medium (6) beschichtet ist,
◆ Einlassmittel (9) für das zu reinigende Abgas,
◆ Auslassmittel (12) für das gereinigte Abgas,
wobei das zu reinigende Abgas derartig geführt wird (13), dass es die Innenfläche der Wand des äußeren Gefäßes umspült und die Wand des inneren Gefäßes durchquert.

4. Vorrichtung nach Anspruch 3, **dadurch gekennzeichnet, dass** sowohl das äußere Gefäß (1) als auch das innere Gefäß (4) eine zylindrische Form aufweisen.

5. Vorrichtung nach Anspruch 4, **dadurch gekennzeichnet, dass** die UV-Strahlungsquelle in Form wenigstens einer röhrenförmigen UV-Lampe (7) vorliegt, die zwischen der Wand des zylindrischen äußeren Gefäßes und der Wand des zylindrischen inneren Gefäßes - und zwar parallel zu den Wänden - angeordnet ist.

6. Vorrichtung nach einem der Ansprüche 4 oder 5, **dadurch gekennzeichnet, dass** die Einlassmittel für das Abgas in Form wenigstens einer Öffnung (9) vorliegen, die an der Peripherie einer der Flächen des zylindrischen äußeren Gefäßes (1) angeordnet ist.

7. Vorrichtung nach einem der Ansprüche 4 bis 6, **dadurch gekennzeichnet, dass** die Auslassmittel für das Abgas in Form einer Öffnung (12) vorliegen, die auf der gegenüberliegenden Fläche des zylindrischen inneren Gefäßes angeordnet ist.

8. Vorrichtung nach einem der Ansprüche 4 bis 7, **dadurch gekennzeichnet, dass** wenigstens eines der zylindrischen Gefäße durch eine Drehbewegung angetrieben wird.

9. Vorrichtung nach Anspruch 8, **dadurch gekennzeichnet, dass** die zwei zylindrischen Gefäße sich in der gleichen Richtung drehen.

10. Vorrichtung nach Anspruch 8, **dadurch gekennzeichnet, dass** die zwei zylindrischen Gefäße sich in entgegengesetzter Richtung drehen.

11. Vorrichtung nach einem der Ansprüche 3 bis 10, **dadurch gekennzeichnet, dass** sie darüber hinaus mit Absaugmitteln für das Abgas versehen ist.
